# EUROPEAN PATENT SPECIFICATION

(11) **EP 4 668 233 B1**
(45) Date of publication and mention of the grant of the patent: **12.08.2026**
(21) Application number: 25183907.2
(22) Date of filing: 19.06.2025
(51) Int. Cl.: G06V 20/13

(54) **METHOD AND SYSTEM TO ASSESS PHYSICAL RISKS FROM GEOSPATIAL DATA OF GEOGRAPHICAL REGION**
VERFAHREN UND SYSTEM ZUR BEURTEILUNG PHYSIKALISCHER RISIKEN AUS GEOSPATIALEN DATEN EINER GEOGRAFISCHEN REGION
PROCÉDÉ ET SYSTÈME D'ÉVALUATION DE RISQUES PHYSIQUES À PARTIR DE DONNÉES GÉOSPATIALES DE RÉGION GÉOGRAPHIQUE

(30) Priority: 20.06.2024 IN 202421047599
(43) Date of publication of application: 24.12.2025
(73) Proprietor: Tata Consultancy Services Limited, Maharashtra (IN)
(72) Inventor: DESHPANDE, Shailesh Shankar, 411013 Pune, Maharastra (IN); ASWAL, Shreyansh, 411057 Pune, Maharashtra (IN); PAL, Arpan, 700091 Kolkata, West Bengal (IN)
(74) Representative: Goddar, Heinz J.

(56) References cited:
- LIU GEXU ET AL: "Geographic-Information-System-Based Risk Assessment of Flooding in Changchun Urban Rail Transit System", REMOTE SENSING (BASEL, SWITZERLAND), vol. 15, no. 14, 13 July 2023 (2023-07-13), Basel, pages 3533, XP093292637, ISSN: 2072-4292, DOI: 10.3390/rs15143533
- WU JINRU ET AL: "Assessment of long and short-term flood risk using the multi-criteria analysis model with the AHP-Entropy method in Poyang Lake basin", INTERNATIONAL JOURNAL OF DISASTER RISK REDUCTION, vol. 75, 1 June 2022 (2022-06-01), pages 102968, XP093292636, ISSN: 2212-4209, DOI: 10.1016/j.ijdrr.2022.102968
- WU XU ET AL: "Flood risk assessment model combining hierarchy process and variable fuzzy set theory: a case study in Zhejiang province, China", ARABIAN JOURNAL OF GEOSCIENCES, SPRINGER INTERNATIONAL PUBLISHING, CHAM, vol. 15, no. 2, 1 January 2022 (2022-01-01), XP037669063, ISSN: 1866-7511, [retrieved on 20220118], DOI: 10.1007/S12517-022-09440-5
- ANCHIMA S J ET AL: "Vulnerability evaluation utilizing AHP and an ensemble model in a few landslide-prone areas of the Western Ghats, India", ENVIRONMENT, DEVELOPMENT AND SUSTAINABILITY, SPRINGER NETHERLANDS, DORDRECHT, vol. 27, no. 3, 23 November 2023 (2023-11-23), pages 6423 - 6466, XP038098147, DOI: 10.1007/S10668-023-04149-1
- LAMEK NAHAYO ET AL: "Estimating landslides vulnerability in Rwanda using analytic hierarchy process and geographic information system", INTEGRATED ENVIRONMENTAL ASSESSMENT AND MANAGEMENT, SOCIETY OF ENVIRONMENTAL TOXICOLOGY AND CHEMISTRY, US, vol. 15, no. 3, 25 March 2019 (2019-03-25), pages 364 - 373, XP072313014, ISSN: 1551-3777, DOI: 10.1002/IEAM.4132

## Description

### TECHNICAL FIELD

The disclosure herein generally relates to assess physical risks, and, more particularly, to method and system to assess physical risks from geospatial data of geographical region.

### BACKGROUND

In recent years, there has been a significant increase in the occurrence of natural disasters, adversely affecting natural habitats and different sectors of the economy. Geospatial data analysis generally requires combination of data from multiple sources for specific challenges such as vulnerability assessment, resource potential assessment of a ground sample and the like. This necessitates the use of various physical risk mitigation strategies in which flood vulnerability assessment plays a substantial role. However, physics-based models based on the first principle are generally very complex and cannot be solved easily for problems such as vulnerability analysis or resource potential identification for earthquakes, floods, and such natural disasters. This is because vulnerability analysis depends upon many factors referred to as influencing factors with complex behavior of its own.

However, establishing definitive quantitative relation between the influencing factors and the effect of such natural disaster is not feasible in certain scenarios. For example, healthy natural drainage is extremely critical due to the stability of slopes, yet it is difficult to establish quantitative relation between changes in drainage pattern and instability of slopes. Furthermore, statistical models are not sufficient as they do not capture the physical processes of the model. Given the complexity, analysis is commonly done using expert driven Analytical Hierarchical Process (AHP) model. LIU GEXU ET AL: "Geographic-Information-System-Based Risk Assessment of Flooding in Changchun Urban Rail Transit System", REMOTE SENSING (BASEL, SWITZERLAND), vol. 15, no. 14, 13 July 2023 (2023-07-13), page 3533, Basel, ISSN: 2072-4292, DOI: 10.3390/rs15143533 discloses a GIS-based method combined with an analytical hierarchy process (AHP) and an improved entropy weight method to comprehensively evaluate the urban flood risk in Changchun City's metro systems in China.

Existing techniques determine vulnerability assessment of earthquakes, floods in buildings, typhoons and tropical storms are assessed thereby introducing new vulnerability indexes. The vulnerability indexes of each influencing factor are determined using the AHP and then a vulnerability score is generated by performing field investigation of damage present in the buildings which is tedious, time consuming and complex in nature. However, such vulnerability assessment techniques lack the ability to assess physical risks due to slopes instability. Also, existing statistical models lack capturing risks associated with physical models.

### SUMMARY

Embodiments of the present disclosure present technological improvements as solutions to one or more of the above-mentioned technical problems recognized by the inventors in conventional systems. For example, in one embodiment, a method to assess physical risks from geospatial data of geographical region is provided according to claim 1. The system includes obtaining by (i) a data driven model (DDM), a set of training images comprising one or more multispectral data, one or more hyperspectral data, and a set of historical hazards, and (ii) an analytic hierarchy process (AHP) model, the set of training images and a set of factors influencing physical risks. Further, each pixel associated with each training image among the set of training images determines (i) a first class vector (Y_{C}) using the DDM, and (ii) a second class vector (Y_{A}) using the AHP model. The first class vector comprises a set of classes which corresponds to susceptibility of natural hazard and the second class vector comprises a set of classes which correspond to susceptibility of natural hazard based on a set of hazard influencing factors. Then, a combined class vector for each pixel using the first class vector and the second class vector based on one or more dynamic weights. Finally, an off the shelf model (OTSM) is trained using a weighted average of the combined class vector.

In another aspect, a system to assess physical risks from geospatial data of geographical region is provided according to claim 5. The method includes obtaining by (i) a data driven model (DDM), a set of training images comprising one or more multispectral data, one or more hyperspectral data, and a set of historical hazards, and (ii) an analytic hierarchy process (AHP) model, the set of training images and a set of factors influencing physical risks. Further, each pixel associated with each training image among the set of training images determines (i) a first class vector (Y_{C}) using the DDM, and (ii) a second class vector (Y_{A}) using the AHP model. The first class vector comprises a set of classes which corresponds to susceptibility of natural hazard and the second class vector comprises a set of classes which correspond to susceptibility of natural hazard based on a set of hazard influencing factors. Then, a combined class vector for each pixel using the first class vector and the second class vector based on one or more dynamic weights. Finally, an off the shelf model (OTSM) is trained using a weighted average of the combined class vector.

In yet another aspect, there are provided one or more non-transitory machine-readable information storage, according to claim 9. comprising one or more instructions, which when executed by one or more hardware processors causes a method to assess physical risks from geospatial data of geographical region is provided. The method includes obtaining by (i) a data driven model (DDM), a set of training images comprising one or more multispectral data, one or more hyperspectral data, and a set of historical hazards, and (ii) an analytic hierarchy process (AHP) model, the set of training images and a set of factors influencing physical risks. Further, each pixel associated with each training image among the set of training images determines (i) a first class vector (Y_{C}) using the DDM, and (ii) a second class vector (Y_{A}) using the AHP model. The first class vector comprises a set of classes which corresponds to susceptibility of natural hazard and the second class vector comprises a set of classes which correspond to susceptibility of natural hazard based on a set of hazard influencing factors. Then, a combined class vector for each pixel using the first class vector and the second class vector based on one or more dynamic weights. Finally, an off the shelf model (OTSM) is trained using a weighted average of the combined class vector.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates an exemplary system for assessing physical risks from geospatial data associated with geographical region according to some embodiments of the present invention.
FIG.2 is a functional block diagram illustrating an off the shelf model (OTSM) training phase using various components of the system 100, in accordance with some embodiments of the present disclosure.
FIG.3 is a flow diagram illustrating a method to assess physical risks from geospatial data associated with geographical region using the system 100, in accordance with some embodiments of the present disclosure.
FIG.4 illustrates an functional block diagram illustrating the OTSM inference phase using various components of the system 100, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments as provided in the appended claims.

### GLOSSARY:

**AHP** is an Analytical Hierarchy Process which is a multicriteria decision making process.

**Vulnerability assessment** defines any process used to determine the vulnerability of an area for a natural hazard.

**Influencing factors** are the factors which directly affects the vulnerability of a geographical region for a natural hazard which affects onset of a hazard.

**Events** can be any natural hazard such as flood, landslide, drought and the like.

**Physical risk** denotes the likelihood of geographical area being affected by certain natural hazard.

**DDM** is a data driven model, which is a FCNN (Fully connected Neural Network) or a CNN (Convolutional Neural Network).

**OTSM** is an Off the Shelf model which is a FCNN or a CNN typically smaller than the DDM.

**Digital Twin** is a neural network model which mimics output of the AHP model.

**Entropy** measures uncertainty in the output of machine learning (ML) model. Higher the entropy more the uncertainty and lesser the separation boundary between various classes.

**Dynamic assignment** of weights are weights which are updated continuously as soon as newer data is available instead of being hard-coded into the overall system.

Disasters can occur at any point in time. It is essential to predict possible scenarios and consider mitigation plan for protection of all involved individuals during occurrence of any natural disaster. Vulnerability assessment is an essential part of geospatial data analysis, which is usually performed using an analytical hierarchy process (AHP) model. The AHP model starts with selecting a set of influencing factors affecting physical risk due to natural hazards such as flood, landslide and the like. Geospatial data related to the set of influencing factors for each ground sample over the area of interest are gathered and processed by performing normalization. Further, one or more domain experts assign one or more weights to each influencing factor to calculate scoring function and a final score is a weighted summation of all field values from the set of influencing factors. However, the one or more weights assigned in accordance with the set of physical risks do not explicitly consider affecting influencing factors. Furthermore, relation between each influencing factor and events of interest (such as landslide) is assumed to be linear, which is not true most of the time. There exists challenge in gathering the training data as recreation is difficult on real scale and vulnerability analysis becomes complex in real time scenarios.

Embodiments herein provide a method and system to assess physical risks from geospatial data of geographical region. The system may be alternatively referred as physical risk assessment system. The method of the present disclosure combines the knowledge of deep learning techniques and the AHP model to create desired output which is likelihood of each influencing factor corresponding to physical risk of the natural hazard. The AHP model updates one or more model weights of the method which provides advantages by transferring the learning from a data driven model (DDM) to a digital twin of the AHP model. The digital twin may be a ML (Machine Learning) model which learns to match the AHP model results or a simple implementation of the AHP model as a weighted summation model. The method is a combinatorial approach of the DDM and the AHP model which enables to assess vulnerability occurring in geographical region of interest. The method overcomes the drawbacks of the AHP model and machine learning or deep learning model leveraging utility by increasing training data. Further, the method helps to map various geographical regions which are likely to be more or less susceptible to a particular hazard. This results in efficient identification of vulnerable geographical regions and appropriate measures can be taken which can reduce the loss of lives, properties being damaged, and can help preserve the local ecosystems.

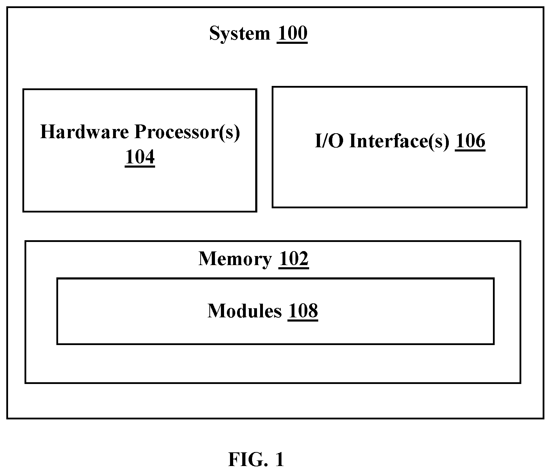

Referring now to the drawings, and more particularly to FIG.1 through FIG.4, where similar reference characters denote corresponding features consistently throughout the figures, there are shown preferred embodiments and these embodiments are described in the context of the following exemplary system and/or method.

FIG.1 illustrates an exemplary system for assessing physical risks from geospatial data associated with geographical region according to some embodiments of the present invention. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a user interface, a tracking dashboard to display performance of the enterprise application, and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

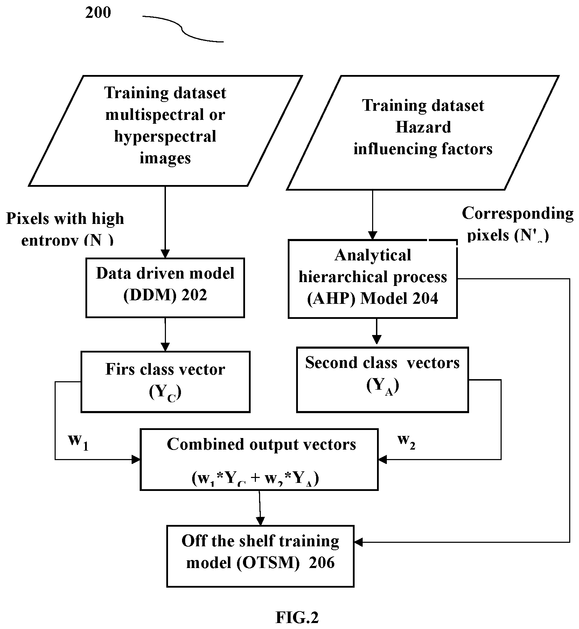

In an embodiment, the memory 102 includes a plurality of modules 110 such as an data driven model 202, a AHP model 204 and so on as depicted in FIG.2. The plurality of modules 110 include programs or coded instructions that supplement applications or functions performed by the system 100 for executing different steps involved in the process of assessing physical risks from geospatial data associated with geographical region being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

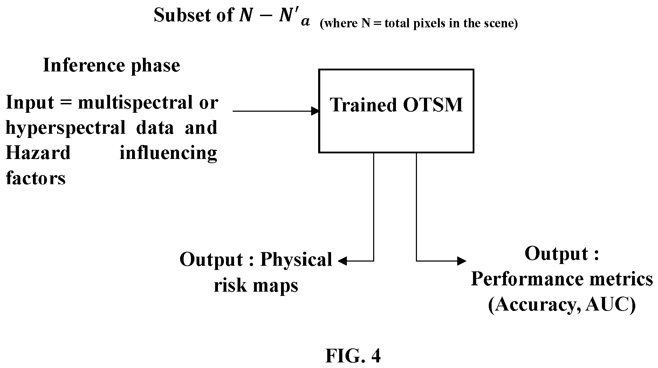

Further, the memory 102 may comprise information pertaining to input(s)/output(s) of each step performed by the processor(s) 104 of the system 100 and methods of the present disclosure. Further, the memory 102 includes a database 108. Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to FIG.2 and steps in flow diagrams in FIG.4.

FIG.2 is a process flow 200 illustrating the training phase of the OSTM of the system 100, in accordance with some embodiments of the present disclosure. The FIG.2 depicts various components of an off the shelf (OTSM) training phase by transferring learning approach obtained from the data driven model 202, the analytical hierarchy process (AHP) model 204 and the OTSM 206.

The data driven model (DDM) 202 is a deep FCNN (Fully Connected Neural Network) or a deep CNN (Convolutional Neural Network), which is trained on historical data of natural hazards. The natural hazards may be for example floods, landslides, droughts, wildfire and the like. The output of the DDM is a heatmap which maps various geographical areas according to one or more vulnerability risks. The input to the DDM may be RGB images or one or more multispectral images or one or more hyperspectral images scene of a specific geographical region. The objective of the heatmap is to map each pixel of the geographical region being considered into at least one of five classes comprising 1. very low risk, 2. low risk, 3. moderate risk, 4. high risk, and 5. very high risk. These class labels, as their name suggests, identify geographical regions more susceptible to a particular hazard based on the spectral information of the region. It should be noted that classification of five vulnerability classes is based on generally accepted standards, and there are no established guidelines for this classification process.

The analytical hierarchy process model 204 obtains the set of influencing factors such as soil type, population density, elevation, and the like as inputs which would vary depending upon each hazard and the geographical region for which the physical risk map is being constructed. For both the models (202 and 204) the output for each pixel is a value representing a vulnerability score. Using the vulnerability score the physical risk map is constructed where each geographical region will be mapped to one of the five classes as discussed earlier depending upon threshold values decided by the domain expert based on at least one of the weighted summation score or the output of the neural network model. The one or more weights for the AHP model are provided by experts. The digital twin of the AHP model is a neural network trained on the outputs of weighted summation AHP model as mentioned earlier. Here, the AHP model is either a simple weighted summation of each influencing factor or a neural network, which is trained on outputs obtained by the weighted sum of all the set of influencing factors. The one or more weights are obtained after performing a pairwise comparison between each influencing factor of each natural hazard. The neural network has an added advantage of flexibility since it is with learnable parameters. However, weighted summation model is simpler to construct and would use fewer resources.

The OTSM 206 is trained using the output vectors of the analytical hierarchy process model 204 and the data driven model DDM 202. The OTSM 206 can be any machine learning model (traditional or deep learning) with trainable parameters. Here, any deep learning of the OTSM is shallower than the DDM, but deep enough to capture important relationships between the input patterns and the resultant output. The shallow nature is because it can be trained on samples of high entropy, and also the number of training samples for the model would be lesser than the DDM model. Thus, a deeper model results in overfitting. Since the knowledge of the DDM is distilled over the OTSM which is size comparable to the DDM. Since it defeats the whole purpose of distillation (where knowledge is transferred from a larger model to a smaller model in such a way that the smaller model tries to acquire the generalization ability of the larger model, so that it can replicate the performance of the larger model on new unseen data). The training process of the OTSM is like any ML model. The set of influencing factors are fed as input for a particular natural hazard, and the output labels are the weighted sum of the output vectors of the DDM and the AHP model. The true labels for pixels can also be incorporated in the overall training loss function can be depicted as in Equation 1, $\begin{matrix}Overall Loss = alpha ∗ Hard Target Loss + \left(1-alpha\right) \\ ∗ Soft Target Loss\end{matrix}$ Where,
Hard Target Loss is the loss due to difference between the actual labels and the labels predicted by OTSM,
Soft Target Loss is the loss due to difference between the labels generated by weighted sum of DDM and AHP model, and the labels predicted by the OTSM and *alpha* would be low.

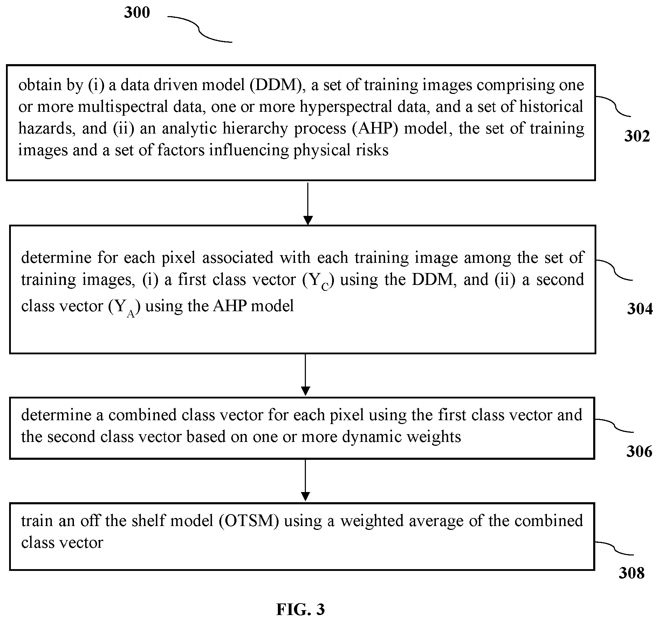

FIG.3 is a flow diagram illustrating a method 300 for assessing physical risks from geospatial data associated with geographical region, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.1 and FIG.2, the steps of flow diagram as depicted in FIG.3 and a use case example of physical risk assessment scenario in FIG.4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIG.3 and the steps of the method 300, at step 302 of the method 300, the one or more hardware processors 104 are configured by the instructions to obtain by (i) a data driven model (DDM), a set of training images comprising one or more multispectral data, one or more hyperspectral data, and a set of historical hazards, and (ii) an analytic hierarchy process (AHP) model , the set of training images and a set of factors influencing physical risks.

The set of factors influencing physical risks includes slope, average rainfall, TWI, lithology, land-cover, soil type, distance to roads, vegetation indices, soil moisture, population density, and so on.

At step 304 of the method 300, the one or more hardware processors 104 is configured to determine for each pixel associated with each training image among the set of training images, (i) a first class vector (Y_{C}) using the DDM, and (ii) a second class vector (Y_{A}) using the AHP model.

Here, the first class vector for each pixel of each training image includes a set of classes which corresponds to susceptibility of natural hazard. The second class vector for each pixel includes a set of classes which corresponds to susceptibility of natural hazard based on the set of hazard influencing factors.

Now at 306 of the method 300, the one or more hardware processors 104 are configured to determine a combined class vector for each pixel using the first class vector and the second class vector based on one or more dynamic weights.

As described above FIG.2 depicts the combined class vector is obtained using the first class vector and the second class vector.

At step 308 of the method 300, the one or more hardware processors 104 is configured to train an off the shelf model (OTSM) using a weighted average of the combined class vector.

Referring now to FIG.2, the OTSM training model 206 obtains the output vectors as the first class vector (***Y_{c}***) from the DDM 202 and the second class vector (***Yₐ***) from the AHP model 204. For a particular input pixel, there would be two output vectors produced, one by the DDM and the other by the AHP model.

The knowledge of these two models are combined and transferred to the OTSM 206 in training phase. The transfer performs the following steps such as, initially one or more input samples with high entropy with respect to the output of the DDM) are selected and these samples with high entropy results in better transfer of generalization capability of the larger model (DDM) to the smaller model (OTSM). Further, the one or more output vectors are obtained from the DDM 202 and the AHP model 204 for these samples. Finally, the OTSM is trained where the inputs are the pixels for which the output of the DDM with high output entropy, and the expected outputs is a vector which is a weighted sum of the outputs of the DDM and the AHP model. One of the most important aspects is the weightage which is given to the outputs of the DDM and the AHP model during training. The weights are either hard-coded and decided based on which combination provides the best performance, or they can be updated dynamically. Adding dynamic update feature increases flexibility of the AHP model but also complexity and the utilization of computational resources.

In another embodiment, the steps for updating dynamic weights are for a new sample a label depicting hazard will be depicted as one and label depicting non-hazard will be depicted as zero. The susceptibility score of the sample is predicted using the DDM and the AHP model. Based on the susceptibility score, a corresponding correctness score is calculated which represents how close the susceptibility score is to actual label as either zero or one based on at least one of a criteria,
Criteria 1 - If the difference in correctness score between the two models is greater than a pre-determined threshold the dynamic weights are not updated.
Criteria 2 - If the difference is higher than the pre-determined threshold value, the updated weights are calculated as $w 1 ′ = w 1 + delta _ 1 ∗ UF$ $w 2 ′ = w 2 - delta ∗ UF \left(if C1>C2\right) ,$ where *delta*_1 = *C*1 / (*C*1 + *C*2) and *delta*_2 *= C2* / *(C1* + *C2),* C1 and C2 being the correctness scores of the two models. UF is the update factor, which can be varied.
Criteria 3 - Once the dynamic weights are updated normalization is performed so the final updated weights will be calculated using the new data set, $w 1 _ new = w 1 ′ / \left(w1′+w2′\right)$ $w 2 _ new = w 2 ′ / \left(w1′+w2′\right)$

Finally, the trained OTSM is used in inference phase (referring now FIG.4) to assess physical risks and the physical risk map. The physical risk map is not limited to,
- **Natural Hazard Management:** Appropriate emergency response planning can be done depending upon the susceptibility value of an area.
- **Conserving Ecosystem and Environment:** Aiding conservation planning for certain species, also relocating/restoring their habitat which falls in a vulnerability prone area.
- **Planning Infrastructure:** Developing infrastructures resilient to hazards according to the area's vulnerability score.
- **During deployment (inference):**
While one or more high entropy samples are selected for training the OTSM, the inference set can consist of all types of samples. This would show the generalization capability of the OTSM.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of accurately assessing how vulnerable an area is, with respect to the natural hazard. The embodiment thus provides the model approach of utilizing evidence based modeling in the form of a deep machine learning model in addition to expert-based analysis in the form of the AHP model. Moreover, the embodiments herein further provides additional flexibility of manual or dynamic updating the weightage given to the machine learning model and the AHP model for mapping the physical risk.

The main objective of the method is to map various areas which are likely to be more or less susceptible to a particular hazard. This can help identify vulnerable areas, and appropriate measures can be taken which can reduce the loss of lives, properties being damaged, and can help preserve the local ecosystems. It should be noted that the data driven model may provide higher accuracy for historical hazards mapping (as it is trained exclusively on that data) disclosed herein is expected to do better than the DDM for future hazard susceptibility mapping, as it is combining the domain knowledge of experts in addition to the historical hazards data, while the DDM only operates on the later. Along with historical events domain knowledge provided by experts are utilized to identify vulnerable areas for a given geographical region with respect to each hazard. In the absence of each historical event data for the particular area, the model just map the geographical area according to the knowledge provided by domain experts for the area under consideration. Thus, without any data driven model (DDM) the OTSM is just an instance of the AHP model. It should be noted that the inputs to both the OTSM and the AHP model are of the same type (influencing factors like soil type, elevation, etc.) so the OTSM can be treated as an instance of AHP model which has access to additional data. However, their architecture can vary. The OTSM is typically more complex than the AHP model, as it must learn from the DDM and the AHP model itself.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the appended claims. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) to assess physical risks from geospatial data, the method comprising:
training, via one or more hardware processor, a data driven model (DDM) with historical data of natural hazards to obtain an output of a heatmap which maps multiple geographical areas according to one or more vulnerability risks;
obtaining (302) via one or more hardware processor, by (i) the data driven model (DDM), a set of training images comprising one or more multispectral data, one or more hyperspectral data, and a set of historical hazards, and (ii) an analytic hierarchy process (AHP) model ,wherein the AHP receives the set of training images and a set of factors influencing physical risks as inputs, wherein factors influencing physical risks are due to natural hazards and wherein the AHP model is trained on outputs obtained by weighted sum of the set of factors influencing physical risks, wherein one or more domain experts assign one or more weights to each factor influencing physical risks to calculate a scoring function and a final score is obtained as the weighted sum of the set of factors influencing physical risks by weighted summation of field values from the set of factors influencing physical risks;
determining (304) via the one or more hardware processors, for each pixel associated with each training image among the set of training images, (i) a first class vector (Y_{C}) using the DDM, and (ii) a second class vector (Y_{A}) using the AHP model, wherein the first class vector (Y_{C}) and the second class vector (Y_{A}) comprise a set of classes which correspond to susceptibility of natural hazard;
determining (306) via the one or more hardware processors, a combined class vector for each pixel using the first class vector and the second class vector based on one or more dynamic weights; and
training (308) via the one or more hardware processors, an off the shelf model (OTSM) using a weighted average of the combined class vector of the DDM and the AHP model, wherein the OTSM is a machine learning model smaller in size compared to the size of the DDM and wherein the weighted average of the combined class vector is updated dynamically by dynamically assigning weights for the first class vector and the second class vector.

2. The method as claimed in claim 1, wherein the trained OTSM during inferencing stage, is used to assess physical risks and a physical risk map for a set of input images associated with the geographical region.

3. The processor implemented method as claimed in claim 1, wherein the first class vector comprises a high entropy sample for each pixel.

4. The processor implemented method as claimed in claim 1, wherein the DDM transfers knowledge having high entropy samples of each pixel of the AHP model to train the OTSM.

5. A system (100) to assess physical risks from geospatial data, comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
train a data driven model (DDM) with historical data of natural hazards to obtain an output of a heatmap which maps multiple geographical areas according to one or more vulnerability risks;
obtain by (i) the data driven model (DDM), a set of training images comprising one or more multispectral data, one or more hyperspectral data, and a set of historical hazards, and (ii) an analytic hierarchy process (AHP) model, wherein the AHP receives the set of training images and a set of factors influencing physical risks as inputs, wherein factors influencing physical risks are due to natural hazards and wherein the AHP model is trained on outputs obtained by weighted sum of the set of factors influencing physical risks, wherein one or more domain experts assign one or more weights to each factor influencing physical risks to calculate a scoring function and a final score is obtained as the weighted sum of the set of factors influencing physical risks by weighted summation of field values from the set of factors influencing physical risks;
determine for each pixel associated with each training image among the set of training images, (i) a first class vector (Y_{C}) using the DDM, and (ii) a second class vector (Y_{A}) using the AHP model, wherein the first class (Y_{C}) vector and the second class (Y_{A}) vector comprise a set of classes which correspond to susceptibility of natural hazard;
determine a combined class vector for each pixel using the first class vector and the second class vector based on one or more dynamic weights; and
train an off the shelf model (OTSM) using a weighted average of the combined class vector of the DDM and the AHP model, wherein the OTSM is a machine learning model smaller in size compared to the size of the DDM and wherein the weighted average of the combined class vector is updated dynamically by dynamically assigning weights for the first class vector and the second class vector.

6. The system as claimed in claim 5 wherein the trained OTSM, during inferencing stage, is used to assess physical risks and a physical risk map for a set of input images associated with the geographical region.

7. The system as claimed in claim 5, wherein the first class vector comprises a high entropy sample for each pixel.

8. The system as claimed in claim 5, wherein the DDM transfers knowledge having high entropy samples of each pixel of the AHP model to train the OTSM.

9. One or more non-transitory machine-readable information storage mediums comprising one or more instructions which when executed by one or more hardware processors cause:
training a data driven model (DDM) with historical data of natural hazards to obtain an output of a heatmap which maps multiple geographical areas according to one or more vulnerability risks;
obtaining, by (i) the data driven model (DDM), a set of training images comprising one or more multispectral data, one or more hyperspectral data, and a set of historical hazards, and (ii) an analytic hierarchy process (AHP) model , wherein the AHP receives the set of training images and a set of factors influencing physical risks as inputs, wherein factors influencing physical risks are due to natural hazards and wherein the AHP model is trained on outputs obtained by weighted sum of the set of factors influencing physical risks, wherein one or more domain experts assign one or more weights to each factor influencing physical risks to calculate a scoring function and a final score is obtained as the weighted sum of the set of factors influencing physical risks by weighted summation of field values from the set of factors influencing physical risks;
determining, for each pixel associated with each training image among the set of training images, (i) a first class vector (Y_{C}) using the DDM, and (ii) a second class vector (Y_{A}) using the AHP model, wherein the first class vector (Y_{C}) and the second class vector (Y_{A}) comprise a set of classes which correspond to susceptibility of natural hazard;
determining, a combined class vector for each pixel using the first class vector and the second class vector based on one or more dynamic weights; and
training, an off the shelf model (OTSM) using a weighted average of the combined class vector, wherein the OTSM is a machine learning model smaller in size compared to the size of the DDM and wherein the weighted average of the combined class vector is updated dynamically by dynamically assigning weights for the first class vector and the second class vector.

10. The one or more non-transitory machine readable information storage mediums as claimed in claim 9, wherein the trained OTSM during inferencing stage, is used to assess physical risks and a physical risk map for a set of input images associated with the geographical region.

11. The one or more non-transitory machine readable information storage mediums as claimed in claim 9, wherein the first class vector comprises a high entropy sample for each pixel.

12. The one or more non-transitory machine readable information storage mediums as claimed in claim 9, wherein the DDM transfers knowledge having high entropy samples of each pixel of the AHP model to train the OTSM.

## Patentansprüche

1. Prozessorimplementiertes Verfahren (300) zum Bewerten physikalischer Risiken aus georäumlichen Daten, wobei das Verfahren Folgendes umfasst:
Trainieren, über einen oder mehrere Hardwareprozessoren, eines datengetriebenen Modells (DDM) mit historischen Daten von Naturgefahren, um eine Ausgabe einer Heatmap zu erhalten, die mehrere geografische Gebiete gemäß einem oder mehreren Anfälligkeitsrisiken abbildet;
Erhalten (302), über einen oder mehrere Hardwareprozessoren, durch (i) das datengetriebene Modell (DDM), eines Satzes von Trainingsbildern, die ein oder mehrere multispektrale Daten, ein oder mehrere hyperspektrale Daten und einen Satz von historischen Gefahren umfassen, und (ii) eines Modells eines analytischen Hierarchieprozesses (AHP), wobei der AHP den Satz von Trainingsbildern und einen Satz von Faktoren, die physikalische Risiken beeinflussen, als Eingaben empfängt, wobei Faktoren, die physikalische Risiken beeinflussen, auf Naturgefahren zurückzuführen sind und wobei das AHP-Modell auf Ausgaben trainiert wird, die durch gewichtete Summe des Satzes von Faktoren, die physikalische Risiken beeinflussen, erhalten werden, wobei ein oder mehrere Domänenexperten jedem Faktor, der physikalische Risiken beeinflusst, ein oder mehrere Gewichte zuweisen, um eine Bewertungsfunktion zu berechnen, und eine Endbewertung als die gewichtete Summe des Satzes von Faktoren, die physikalische Risiken beeinflussen, durch gewichtete Summierung von Feldwerten aus dem Satz von Faktoren, die physikalische Risiken beeinflussen, erhalten wird;
Bestimmen (304), über den einen oder die mehreren Hardwareprozessoren, für jedes Pixel, das mit jedem Trainingsbild aus dem Satz von Trainingsbildern assoziiert ist, (i) eines ersten Klassenvektors (Y_{C}) unter Verwendung des DDM und (ii) eines zweiten Klassenvektors (Y_{A}) unter Verwendung des AHP-Modells, wobei der erste Klassenvektor (Y_{C}) und der zweite Klassenvektor (Y_{A}) Satz von Klassen umfassen, die der Anfälligkeit für Naturgefahren entsprechen;
Bestimmen (306), über den einen oder die mehreren Hardwareprozessoren, eines kombinierten Klassenvektors für jedes Pixel unter Verwendung des ersten Klassenvektors und des zweiten Klassenvektors basierend auf einem oder mehreren dynamischen Gewichten; und
Trainieren (308), über den einen oder die mehreren Hardwareprozessoren, eines Off-the-Shelf-Modells (OTSM) unter Verwendung eines gewichteten Durchschnitts des kombinierten Klassenvektors des DDM und des AHP-Modells, wobei das OTSM ein Maschinenlernmodell ist, das im Vergleich zur Größe des DDM kleiner ist, und wobei der gewichtete Durchschnitt des kombinierten Klassenvektors durch dynamisches Zuweisen von Gewichten für den ersten Klassenvektor und den zweiten Klassenvektor dynamisch aktualisiert wird.

2. Verfahren nach Anspruch 1, wobei das trainierte OTSM während der Inferenzstufe verwendet wird, um physikalische Risiken und eine Karte physikalischer Risiken für einen Satz von Eingabebildern, die mit der geografischen Region assoziiert sind, zu bewerten.

3. Prozessorimplementiertes Verfahren nach Anspruch 1, wobei der erste Klassenvektor eine hohe Entropieprobe für jedes Pixel umfasst.

4. Prozessorimplementiertes Verfahren nach Anspruch 1, wobei das DDM Wissen mit hohen Entropieproben jedes Pixels des AHP-Modells überträgt, um das OTSM zu trainieren.

5. System (100) zum Bewerten physikalischer Risiken aus georäumlichen Daten, das Folgendes umfasst:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Trainieren eines datengetriebenen Modells (DDM) mit historischen Daten von Naturgefahren, um eine Ausgabe einer Heatmap zu erhalten, die mehrere geografische Gebiete gemäß einem oder mehreren Anfälligkeitsrisiken abbildet;
Erhalten, durch (i) das datengetriebene Modell (DDM), eines Satzes von Trainingsbildern, die ein oder mehrere multispektrale Daten, ein oder mehrere hyperspektrale Daten und einen Satz von historischen Gefahren umfassen, und (ii) eines Modells eines analytischen Hierarchieprozesses (AHP), wobei der AHP den Satz von Trainingsbildern und einen Satz von Faktoren, die physikalische Risiken beeinflussen, als Eingaben empfängt, wobei Faktoren, die physikalische Risiken beeinflussen, auf Naturgefahren zurückzuführen sind und wobei das AHP-Modell auf Ausgaben trainiert wird, die durch gewichtete Summe des Satzes von Faktoren, die physikalische Risiken beeinflussen, erhalten werden, wobei ein oder mehrere Domänenexperten jedem Faktor, der physikalische Risiken beeinflusst, ein oder mehrere Gewichte zuweisen, um eine Bewertungsfunktion zu berechnen, und eine Endbewertung als die gewichtete Summe des Satzes von Faktoren, die physikalische Risiken beeinflussen, durch gewichtete Summierung von Feldwerten aus dem Satz von Faktoren, die physikalische Risiken beeinflussen, erhalten wird;
Bestimmen, für jedes Pixel, das mit jedem Trainingsbild aus dem Satz von Trainingsbildern assoziiert ist, (i) eines ersten Klassenvektors (Y_{C}) unter Verwendung des DDM und (ii) eines zweiten Klassenvektors (Y_{A}) unter Verwendung des AHP-Modells, wobei der erste Klassenvektor (Y_{C}) und der zweite Klassenvektor (Y_{A}) Satz von Klassen umfassen, die der Anfälligkeit für Naturgefahren entsprechen;
Bestimmen eines kombinierten Klassenvektors für jedes Pixel unter Verwendung des ersten Klassenvektors und des zweiten Klassenvektors basierend auf einem oder mehreren dynamischen Gewichten; und
Trainieren eines Off-the-Shelf-Modells (OTSM) unter Verwendung eines gewichteten Durchschnitts des kombinierten Klassenvektors des DDM und des AHP-Modells, wobei das OTSM ein Maschinenlernmodell ist, das im Vergleich zur Größe des DDM kleiner ist, und wobei der gewichtete Durchschnitt des kombinierten Klassenvektors durch dynamisches Zuweisen von Gewichten für den ersten Klassenvektor und den zweiten Klassenvektor dynamisch aktualisiert wird.

6. System nach Anspruch 5, wobei das trainierte OTSM während der Inferenzstufe verwendet wird, um physikalische Risiken und eine Karte physikalischer Risiken für einen Satz von Eingabebildern, die mit der geografischen Region assoziiert sind, zu bewerten.

7. System nach Anspruch 5, wobei der erste Klassenvektor eine hohe Entropieprobe für jedes Pixel umfasst.

8. System nach Anspruch 5, wobei das DDM Wissen mit hohen Entropieproben jedes Pixels des AHP-Modells überträgt, um das OTSM zu trainieren.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Trainieren eines datengetriebenen Modells (DDM) mit historischen Daten von Naturgefahren, um eine Ausgabe einer Heatmap zu erhalten, die mehrere geografische Gebiete gemäß einem oder mehreren Anfälligkeitsrisiken abbildet;
Erhalten, durch (i) das datengetriebene Modell (DDM), eines Satzes von Trainingsbildern, die ein oder mehrere multispektrale Daten, ein oder mehrere hyperspektrale Daten und einen Satz von historischen Gefahren umfassen, und (ii) eines Modells eines analytischen Hierarchieprozesses (AHP), wobei der AHP den Satz von Trainingsbildern und einen Satz von Faktoren, die physikalische Risiken beeinflussen, als Eingaben empfängt, wobei Faktoren, die physikalische Risiken beeinflussen, auf Naturgefahren zurückzuführen sind und wobei das AHP-Modell auf Ausgaben trainiert wird, die durch gewichtete Summe des Satzes von Faktoren, die physikalische Risiken beeinflussen, erhalten werden, wobei ein oder mehrere Domänenexperten jedem Faktor, der physikalische Risiken beeinflusst, ein oder mehrere Gewichte zuweisen, um eine Bewertungsfunktion zu berechnen, und eine Endbewertung als die gewichtete Summe des Satzes von Faktoren, die physikalische Risiken beeinflussen, durch gewichtete Summierung von Feldwerten aus dem Satz von Faktoren, die physikalische Risiken beeinflussen, erhalten wird;
Bestimmen, für jedes Pixel, das mit jedem Trainingsbild aus dem Satz von Trainingsbildern assoziiert ist, (i) eines ersten Klassenvektors (Y_{C}) unter Verwendung des DDM und (ii) eines zweiten Klassenvektors (Y_{A}) unter Verwendung des AHP-Modells, wobei der erste Klassenvektor (Y_{C}) und der zweite Klassenvektor (Y_{A}) Satz von Klassen umfassen, die der Anfälligkeit für Naturgefahren entsprechen;
Bestimmen eines kombinierten Klassenvektors für jedes Pixel unter Verwendung des ersten Klassenvektors und des zweiten Klassenvektors basierend auf einem oder mehreren dynamischen Gewichten; und
Trainieren, eines Off-the-Shelf-Modells (OTSM) unter Verwendung eines gewichteten Durchschnitts des kombinierten Klassenvektors, wobei das OTSM ein Maschinenlernmodell ist, das im Vergleich zur Größe des DDM kleiner ist, und wobei der gewichtete Durchschnitt des kombinierten Klassenvektors durch dynamisches Zuweisen von Gewichten für den ersten Klassenvektor und den zweiten Klassenvektor dynamisch aktualisiert wird.

10. Ein oder mehrere nichtflüchtige maschinenlesbare Informationsspeichermedien nach Anspruch 9, wobei das trainierte OTSM während der Inferenzstufe verwendet wird, um physikalische Risiken und eine Karte physikalischer Risiken für einen Satz von Eingabebildern, die mit der geografischen Region assoziiert sind, zu bewerten.

11. Ein oder mehrere nichtflüchtige maschinenlesbare Informationsspeichermedien nach Anspruch 9, wobei der erste Klassenvektor eine hohe Entropieprobe für jedes Pixel umfasst.

12. Ein oder mehrere nichtflüchtige maschinenlesbare Informationsspeichermedien nach Anspruch 9, wobei das DDM Wissen mit hohen Entropieproben jedes Pixels des AHP-Modells überträgt, um das OTSM zu trainieren.

## Revendications

1. Procédé mis en œuvre par processeur (300) pour évaluer des risques physiques à partir de données géospatiales, le procédé comprenant :
l'apprentissage, via un ou plusieurs processeurs matériels, d'un modèle guidé par données (DDM) avec des données historiques de risques naturels pour obtenir une sortie d'une carte de chaleur qui cartographie de multiples zones géographiques selon un ou plusieurs risques de vulnérabilité ;
l'obtention (302), via un ou plusieurs processeurs matériels, par i) le modèle guidé par données (DDM), d'un ensemble d'images d'apprentissage comprenant une ou plusieurs données multispectrales, une ou plusieurs données hyperspectrales, et un ensemble de risques historiques, et (ii) d'un modèle de processus d'analyse hiérarchique (AHP), dans lequel l'AHP reçoit l'ensemble d'images d'apprentissage et un ensemble de facteurs influençant des risques physiques en tant qu'entrées, dans lequel des facteurs influençant des risques physiques sont dus à des risques naturels et dans lequel le modèle AHP est entraîné sur des sorties obtenues par somme pondérée de l'ensemble de facteurs influençant des risques physiques, dans lequel un ou plusieurs experts de domaine attribuent un ou plusieurs poids à chaque facteur influençant des risques physiques pour calculer une fonction de notation et un score final est obtenu en tant que somme pondérée de l'ensemble de facteurs influençant des risques physiques par sommation pondérée de valeurs de champ à partir de l'ensemble de facteurs influençant des risques physiques ;
la détermination (304), via les un ou plusieurs processeurs matériels, pour chaque pixel associé à chaque image d'apprentissage parmi l'ensemble d'images d'apprentissage, (i) d'un premier vecteur de classe (Y_{C}) utilisant le DDM, et (ii) d'un second vecteur de classe (Y_{A}) utilisant le modèle AHP, dans lequel le premier vecteur de classe (Y_{C}) et le second vecteur de classe (Y_{A} ) comprennent un ensemble de classes qui correspondent à une susceptibilité de risque naturel ;
la détermination (306), via les un ou plusieurs processeurs matériels, d'un vecteur de classe combiné pour chaque pixel en utilisant le premier vecteur de classe et le second vecteur de classe sur la base d'un ou plusieurs poids dynamiques ; et
l'apprentissage (308), via les un ou plusieurs processeurs matériels, d'un modèle prêt à l'emploi (OTSM) en utilisant une moyenne pondérée du vecteur de classe combiné du DDM et du modèle AHP, dans lequel l'OTSM est un modèle d'apprentissage machine plus petit en taille par rapport à la taille du DDM et dans lequel la moyenne pondérée du vecteur de classe combiné est mise à jour dynamiquement en attribuant dynamiquement des poids pour le premier vecteur de classe et le second vecteur de classe.

2. Procédé selon la revendication 1, dans lequel l'OTSM entraîné pendant une étape d'inférence, est utilisé pour évaluer des risques physiques et produire une carte de risques physiques pour un ensemble d'images d'entrée associées à la région géographique.

3. Procédé mis en œuvre par processeur selon la revendication 1, dans lequel le premier vecteur de classe comprend un échantillon à entropie élevée pour chaque pixel.

4. Procédé mis en œuvre par processeur selon la revendication 1, dans lequel le DDM transfère des connaissances ayant des échantillons d'entropie élevée de chaque pixel du modèle AHP pour entraîner l'OTSM.

5. Système (100) pour évaluer des risques physiques à partir de données géospatiales, comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
entraîner un modèle guidé par données (DDM) avec des données historiques de risques naturels pour obtenir une sortie d'une carte de chaleur qui cartographie de multiples zones géographiques selon un ou plusieurs risques de vulnérabilité ;
obtenir par (i) le modèle guidé par données (DDM), un ensemble d'images d'apprentissage comprenant une ou plusieurs données multispectrales, une ou plusieurs données hyperspectrales, et un ensemble de risques historiques, et (ii) un modèle de processus d'analyse hiérarchique (AHP), dans lequel l'AHP reçoit l'ensemble d'images d'apprentissage et un ensemble de facteurs influençant des risques physiques en tant qu'entrées, dans lequel des facteurs influençant des risques physiques sont dus à des risques naturels et dans lequel le modèle AHP est entraîné sur des sorties obtenues par somme pondérée de l'ensemble de facteurs influençant des risques physiques, dans lequel un ou plusieurs experts de domaine attribuent un ou plusieurs poids à chaque facteur influençant des risques physiques pour calculer une fonction de notation et un score final est obtenu en tant que somme pondérée de l'ensemble de facteurs influençant des risques physiques par sommation pondérée de valeurs de champ à partir de l'ensemble de facteurs influençant des risques physiques ;
déterminer, pour chaque pixel associé à chaque image d'apprentissage parmi l'ensemble d'images d'apprentissage, (i) un premier vecteur de classe (Y_{C}) utilisant le DDM, et (ii) un second vecteur de classe (Y_{A}) utilisant le modèle AHP, dans lequel le premier vecteur de classe (Y_{C}) et le second vecteur de classe (Y_{A} ) comprennent un ensemble de classes qui correspondent à une susceptibilité de risque naturel ;
déterminer un vecteur de classe combiné pour chaque pixel en utilisant le premier vecteur de classe et le second vecteur de classe sur la base d'un ou plusieurs poids dynamiques ; et
entraîner un modèle prêt à l'emploi (OTSM) en utilisant une moyenne pondérée du vecteur de classe combiné du DDM et du modèle AHP, dans lequel l'OTSM est un modèle d'apprentissage machine plus petit en taille par rapport à la taille du DDM et dans lequel la moyenne pondérée du vecteur de classe combiné est mise à jour dynamiquement en attribuant dynamiquement des poids pour le premier vecteur de classe et le second vecteur de classe.

6. Système selon la revendication 5, dans lequel l'OTSM entraîné, pendant une étape d'inférence, est utilisé pour évaluer des risques physiques et produire une carte de risques physiques pour un ensemble d'images d'entrée associées à la région géographique.

7. Système selon la revendication 5, dans lequel le premier vecteur de classe comprend un échantillon à entropie élevée pour chaque pixel.

8. Système selon la revendication 5, dans lequel le DDM transfère des connaissances ayant des échantillons d'entropie élevée de chaque pixel du modèle AHP pour entraîner l'OTSM.

9. Un ou plusieurs supports de stockage d'informations lisibles par machine non transitoires comprenant une ou plusieurs instructions qui, lorsqu'elles sont exécutées par un ou plusieurs processeurs matériels, amènent :
l'apprentissage d'un modèle guidé par données (DDM) avec des données historiques de risques naturels pour obtenir une sortie d'une carte de chaleur qui cartographie de multiples zones géographiques selon un ou plusieurs risques de vulnérabilité ;
l'obtention, par (i) le modèle guidé par données (DDM), d'un ensemble d'images d'apprentissage comprenant une ou plusieurs données multispectrales, une ou plusieurs données hyperspectrales, et un ensemble de risques historiques, et (ii) d'un modèle de processus d'analyse hiérarchique (AHP), dans lequel l'AHP reçoit l'ensemble d'images d'apprentissage et un ensemble de facteurs influençant des risques physiques en tant qu'entrées, dans lequel des facteurs influençant des risques physiques sont dus à des risques naturels et dans lequel le modèle AHP est entraîné sur des sorties obtenues par somme pondérée de l'ensemble de facteurs influençant des risques physiques, dans lequel un ou plusieurs experts de domaine attribuent un ou plusieurs poids à chaque facteur influençant des risques physiques pour calculer une fonction de notation et un score final est obtenu en tant que somme pondérée de l'ensemble de facteurs influençant des risques physiques par sommation pondérée de valeurs de champ à partir de l'ensemble de facteurs influençant des risques physiques ;
la détermination, pour chaque pixel associé à chaque image d'apprentissage parmi l'ensemble d'images d'apprentissage, (i) d'un premier vecteur de classe (Y_{C}) utilisant le DDM, et (ii) d'un second vecteur de classe (Y_{A}) utilisant le modèle AHP, dans lequel le premier vecteur de classe (Y_{C}) et le second vecteur de classe (Y_{A} ) comprennent un ensemble de classes qui correspondent à une susceptibilité de risque naturel ;
la détermination, d'un vecteur de classe combiné pour chaque pixel en utilisant le premier vecteur de classe et le second vecteur de classe sur la base d'un ou plusieurs poids dynamiques ; et
l'apprentissage, d'un modèle prêt à l'emploi (OTSM) en utilisant une moyenne pondérée du vecteur de classe combiné, dans lequel l'OTSM est un modèle d'apprentissage machine plus petit en taille par rapport à la taille du DDM et dans lequel la moyenne pondérée du vecteur de classe combiné est mise à jour dynamiquement en attribuant dynamiquement des poids pour le premier vecteur de classe et le second vecteur de classe.

10. Un ou plusieurs supports de stockage d'informations lisibles par machine non transitoires selon la revendication 9, dans lequel l'OTSM entraîné pendant une étape d'inférence, est utilisé pour évaluer des risques physiques et produire une carte de risques physiques pour un ensemble d'images d'entrée associées à la région géographique.

11. Un ou plusieurs supports de stockage d'informations lisibles par machine non transitoires selon la revendication 9, dans lequel le premier vecteur de classe comprend un échantillon à entropie élevée pour chaque pixel.

12. Un ou plusieurs supports de stockage d'informations lisibles par machine non transitoires selon la revendication 9, dans lequel le DDM transfère des connaissances ayant des échantillons d'entropie élevée de chaque pixel du modèle AHP pour entraîner l'OTSM.
